(19) Europäisches Patentamt
European Patent Office
Office européen des brevets

(11) EP 3 237 182 B1

(12) FASCICULE DE BREVET EUROPEEN

(45) Date de publication et mention de la délivrance du brevet:
**25.08.2021 Bulletin 2021/34**

(21) Numéro de dépôt: **15820511.2**

(22) Date de dépôt: **21.12.2015**

(51) Int Cl.:
***B29C 70/52*** *(2006.01)*

(86) Numéro de dépôt international:
**PCT/EP2015/080785**

(87) Numéro de publication internationale:
**WO 2016/102460 (30.06.2016 Gazette 2016/26)**

(54) **PROCEDE DE FABRICATION CONTINU D'UN PROFILE EN MATERIAU COMPOSITE A BASE DE POLYMERE THERMOPLASTIQUE A HAUTE FLUIDITE**

VERFAHREN ZUR KONTINUIERLICHEN HERSTELLUNG EINES VERBUNDSTOFFPROFILS AUS THERMOPLASTISCHEM POLYMER MIT HOHER FLIESSFÄHIGKEIT

METHOD FOR THE CONTINUOUS PRODUCTION OF A COMPOSITE MATERIAL PROFILE SECTION FROM THERMOPLASTIC POLYMER HAVING HIGH FLUIDITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1463113**

(43) Date de publication de la demande:
**01.11.2017 Bulletin 2017/44**

(73) Titulaires:
- **Rhodia Operations**
  **93300 Aubervilliers (FR)**
- **Centre Technique Des Industries Mecaniques**
  **60300 Senlis (FR)**

(72) Inventeurs:
- **ORANGE, Gilles**
  **69390 Vourles (FR)**
- **TUPINIER, Didier**
  **38150 Assieu (FR)**
- **PAPIN, Philippe**
  **91750 Bievres (FR)**
- **AUBRY, Mickaël**
  **44370 Belligné (FR)**
- **LEBRUN, Jean-Michel**
  **44000 Nantes (FR)**
- **COMAS-CARDONA, Sébastien**
  **44000 Nantes (FR)**

(74) Mandataire: **Nony**
**11 rue Saint-Georges**
**75009 Paris (FR)**

(56) Documents cités:
**EP-A1- 0 056 703** **WO-A1-2011/131664**
**US-A- 5 073 413**

- **None**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 237 182 B1

Printed by Jouve, 75001 PARIS (FR)

## Description

La présente invention concerne le domaine des matériaux composites, et plus particulièrement celui des profilés composites, élaborés *via* l'imprégnation d'une étoffe (matériau de renfort) avec au moins un polymère thermoplastique haute fluidité à l'état fondu, et leur procédé de fabrication notamment selon une technologie de pultrusion.

Les profilés composites constituent aujourd'hui des matériaux hautes performances pour les industries des marchés de masse comme les transports terrestres (automobile...), l'énergie, les sports et loisirs, les engins agricoles ou de travaux publics, ou des marchés plus limités mais en développement comme l'aéronautique. Ils possèdent en effet de bonnes performances mécaniques intrinsèques, notamment une ductilité, une tenue aux chocs, une bonne stabilité chimique, notamment aux solvants, et une recyclabilité totale pour des pièces injectées performantes.

La technologie par pultrusion, notamment utilisée pour produire de tels profilés composites est un mode de fabrication selon lequel un renfort, par exemple des fibres conditionnées en bobine, est imprégné d'une matrice polymérique par passage dans un bain de monomère liquide ou polymère fondu et tiré au travers d'une filière assurant progressivement la conformation du matériau composite jusqu'à la section du profilé à réaliser.

Il est à noter que les résines thermoplastiques sont aujourd'hui privilégiées pour former la matrice de ces profilés comparativement aux résines thermodurcissables largement utilisées requérant la mise en œuvre de solvants et de monomères et conduisant à des produits non recyclables.

Toutefois, le développement des profilés thermoplastiques en renfort continu par pultrusion est actuellement limité notamment au regard de problèmes de mise en œuvre et de coût associé.

Ainsi, les polymères thermoplastiques disponibles sur le marché présentent une haute viscosité à l'état fondu, typiquement supérieure à 200 Pa.s, ce qui rend difficile l'imprégnation des étoffes de renfort et surtout lorsque le taux de fibres devient important, notamment lorsqu'il est supérieur à 50 % en volume. La mise en œuvre de ce type de polymère nécessite des temps d'imprégnation prolongés, c'est-à-dire une vitesse de tirage du renfort lente voire très lente, et des pressions de mise en œuvre importantes ce qui requiert la présence de chicanes (embarrage) ou guide fils au sein du dispositif. Dans la majeure partie des cas, les profilés obtenus à partir de ces matrices peuvent présenter des microvides et des zones mal imprégnées préjudiciables à leurs propriétés mécaniques. Ce phénomène de perte de propriétés mécaniques est par ailleurs accentué lorsque la vitesse de tirage de l'étoffe de renfort augmente.

En outre, le niveau élevé de viscosité de ces polymères impose des limites. Seule la réalisation de bandes de faible épaisseur ('tapes'), *i.e.* inférieure à 1 mm, à base d'un renfort unidirectionnel s'avère possible dans des conditions de vitesse acceptables. Enfin, il n'est pas compatible avec une technologie d'injection-pultrusion qui consiste à injecter au niveau d'une filière, dite filière chaude, le polymère fondu à des fins d'imprégnation du renfort, seul ou associé à un renfort unidirectionnel, généralement un tissu continu ou un ruban, également introduit dans cette filière chaude.

Or, cette technologie par injection s'avère particulièrement intéressante sur le plan industriel, car compatible avec un mode de fabrication en continu et avec une cadence de production élevée. En effet, le renfort imprégné par injection est tiré en continu *via* un système de tirage, pour être introduit dans un conformateur.

La figure 1 rend précisément compte d'un montage à filière convenant à la mise en œuvre de cette technologie. Il est à noter que l'espace dédié à la conformation de l'étoffe imprégnée peut correspondre à une zone plus froide de la filière dédiée à l'imprégnation comme illustré en cette figure 1, mais également être constitué par une seconde filière dite froide, localisée dans la continuité, immédiate ou non, de la filière chaude.

Malheureusement, cette technologie par injection peut également manifester des dysfonctionnements tels que par exemple un phénomène indésirable d'écoulement du polymère au niveau de l'entrée de la filière chaude ou un effet de gonflement du profilé, ou encore un problème de bourrage dans la zone de conformation dû à un frottement trop élevé entre le profilé et la filière.

Il demeure donc un besoin d'une technologie de fabrication de profilés composite à base thermoplastique, compatible avec un mode de production continu et dénuée des problèmes précités.

Contre toute attente, les inventeurs ont aujourd'hui constaté qu'il s'avère possible de fabriquer en continu et avec une cadence élevée des profilés composites thermoplastiques à l'aide d'une technologie par injection-pultrusion sous réserve de considérer un type de polymère spécifique et de former le profilé en contrôlant son profil thermique lors de sa conformation.

Ainsi, selon un de ses aspects, la présente invention concerne un procédé de fabrication en continu par injection-pultrusion d'un profilé en matériau composite à partir d'au moins une étoffe de renfort et d'au moins un polymère thermoplastique, ledit procédé étant tel que défini en revendication 1.

Dans le présent texte, le terme « polymère thermoplastique » au singulier est utilisé pour désigner indifféremment un unique polymère thermoplastique ou un mélange de polymères thermoplastiques.

Il en est de même pour le terme « étoffe ».

De manière inattendue, les inventeurs ont ainsi découvert que la mise en œuvre d'une part d'une composition polymérique de viscosité inférieure ou égale à 50 Pa.s et constituée pour l'essentiel voire totalement d'un ou plusieurs polymère(s) thermoplastique(s) à l'état fondu, et d'autre part d'un gradient de température spécifique entre la surface

et le cœur du profilé lors de l'étape de conformation, permet d'obtenir des profilés composites *via* un procédé d'injection-pultrusion à une cadence de production élevée.

Certes, des polymères thermoplastiques de faible viscosité dits encore à haute fluidité et en particulier de type polyamide ont déjà été proposés comme matrice pour la formation de matériaux composites, notamment dans les demandes WO 2011/003786 A1, WO 2011/003787 A1, WO 2011/144592 A1 et WO2011/073198 A1.

Toutefois, à la connaissance des inventeurs, aucune des technologies de mises en œuvre considérées pour de tels polymères relève d'une technologie de type injection-pultrusion et encore moins avec la spécificité requise selon l'invention en termes de gradient de température.

De même, le document EP 0 056 703 décrit un procédé de fabrication d'une structure à renforcement de fibres, mettant en œuvre un polymère thermoplastique. Toutefois, il ne concerne pas une technologie d'injection-pultrusion.

Le document US 5,073,413 se rapporte à une méthode et un dispositif pour mouiller des renforts fibreux avec un matériau de matrice dans un procédé de pultrusion. Le document WO2011/131664 décrit un système d'imprégnation adapté pour imprégner des filaments en continu avec une substance d'imprégnation, comprenant un passage axial pour les filaments et un passage pour la substance d'imprégnation.

Comme il ressort notamment des exemples ci-après, le procédé de l'invention s'avère avantageux à plusieurs titres.

Tout d'abord, l'utilisation de polymères thermoplastiques à haute fluidité permet une meilleure imprégnation du matériau de renfort, et donc l'obtention plus rapide de profilés dotés en outre d'une faible porosité. L'utilisation de ce type de polymère permet également de réaliser des profilés avec une haute teneur en fibres.

En outre, le gradient de température imposé lors de la conformation du profilé entre sa surface et son cœur rend possible la fabrication de profilés, à une vitesse compatible avec les besoins de l'industrie, tout en s'affranchissant du phénomène de gonflement classiquement observé sur des pièces fabriquées par pultrusion.

Avantageusement, la vitesse de tirage du renfort élevée ne s'avère aucunement préjudiciable aux bonnes propriétés d'usage et notamment mécaniques du profilé ainsi formé.

Qui plus est le procédé selon l'invention permet de produire une grande diversité de profilés en termes de sections de géométrie, quelconque, pleins ou creux, et à partir d'étoffes de renfort variées telles que des fibres unidirectionnelles, des tissus équilibrés ou non, des rubans, des tresses, ou systèmes multiaxiaux (Non Crimp Fabric).

Selon une variante de réalisation préférée, le procédé de l'invention met en œuvre au moins un agent lubrifiant, notamment en étape c) et/ou d).

Le texte décrit également un profilé susceptible d'être obtenu par le procédé selon l'invention.

Il décrit aussi un article composite comprenant un profilé susceptible d'être obtenu par le procédé selon l'invention, dans lequel ledit profilé est modifié au niveau de sa courbure par cintrage et/ou au niveau de son profil par rotoformage.

Le texte décrit également une structure composite comprenant au moins deux profilés susceptibles d'être obtenus par le procédé selon l'invention, dans lequel lesdits profilés sont assemblés, en particulier par soudage.

D'autres caractéristiques, variantes et avantages du procédé selon l'invention ressortiront mieux à la lecture de la description, des exemples et de la figure qui vont suivre, donnés à titre illustratif et non limitatif de l'invention.

La figure 1 représente schématiquement un exemple d'installation adaptée à la mise en œuvre d'un procédé d'injection-pultrusion.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

## PROCEDE

Comme il ressort de ce qui précède, le procédé selon l'invention est de type injection-pultrusion et repose notamment sur la mise en œuvre d'une composition polymérique thermoplastique de faible viscosité, pour imprégner par injection une étoffe, et la formation selon un procédé continu du profilé à partir de l'étoffe imprégnée de ladite composition fondue, avec un gradient thermique spécifique, lors de l'étape de conformation.

Au sens de l'invention, une composition polymérique thermoplastique est une composition constituée pour l'essentiel, c'est-à-dire à au moins 85 % en poids, de préférence au moins 95 % en poids et plus préférentiellement en totalité d'un polymère thermoplastique à haute fluidité ou d'un mélange d'au moins deux, au moins trois, voire plus, polymères thermoplastiques à haute fluidité. Ces polymères peuvent être cristallins semi-cristallins ou amorphes.

Une composition polymérique thermoplastique selon l'invention peut ainsi être formée d'au moins un polyamide semi-cristallin ou amorphe ou d'un de leurs mélanges.

Une composition polymérique thermoplastique peut ainsi également contenir un ou plusieurs additifs annexes et en particulier un agent fluidifiant tels que définis ci-après.

Selon la présente invention, une composition polymérique thermoplastique ou un polymère thermoplastique est à haute fluidité et à ce titre possède avantageusement une viscosité inférieure ou égale à 50 Pa.s à l'état fondu, en particulier allant de 1 à 30 Pa.s, de préférence de 1 à 25 Pa.s.

Cette viscosité, à l'état fondu, peut être mesurée à l'aide d'un rhéomètre plan-plan de diamètre 50 mm, sous un balayage en cisaillement par palier allant de 1 à 160 $s^{-1}$. Le matériau polymérique à mesurer est sous forme de granulés, éventuellement d'un film d'une épaisseur 150 $\mu$m.

Ainsi, lorsque la composition polymérique est assimilable à un matériau semi-cristallin, elle est amenée à une température allant de 10 à 100 °C au-dessus de son point de fusion, et la mesure est alors effectuée.

En revanche, lorsque la composition polymérique est assimilable à un matériau amorphe, elle est amenée à une température de 100 à 250 °C au-dessus de la température de transition vitreuse, et la mesure est alors effectuée.

A titre représentatif et non limitatif de tels polymères peuvent notamment être cités les polymères obtenus par polycondensation, comme les polyesters, les polyamides et leurs dérivés.

Conviennent tout particulièrement à l'invention les polyesters, polyamides et leurs mélanges.

Il est à noter que les masses moléculaires figurant à l'égard de ces polymères sont pour l'essentiel présentées à titre indicatif d'une échelle de poids. Il est à noter qu'une masse moléculaire spécifique peut être déterminée selon de nombreuses manières qui sont bien connues en soi de l'homme de l'art.

A titre illustratif de ces méthodes peuvent être citées notamment celle se fondant sur une analyse des groupes terminaux et en particulier, celle faisant appel à une mesure de chromatographie sur gel perméable (Gel Permeation Chromatographie GPC) appelée également chromatographie d'exclusion stérique (SEC). D'une manière générale, les mesures GPC d'un polyamide peuvent être réalisées dans le dichlorométhane (solvant et éluent), après modification chimique du polyamide afin de le solubiliser. Un détecteur UV est utilisé car le polyamide modifié chimiquement possède un chromophore UV. Le calcul de la distribution de masses ainsi que des masses moyennes Mn, et Mw peut être effectué en équivalents polystyrène (PST) ou masse absolue, après calibration par des étalons commerciaux. Si nécessaire, des mesures en masses absolues peuvent être réalisées, par détection viscosimétrique. Dans le cadre de la présente invention, les masses moléculaires moyennes Mn et Mw sont exprimées en masse absolue. Les Mn et Mw peuvent être calculées à partir de la totalité de la distribution ou après troncature des faibles masses si on ne souhaite pas prendre en compte la contribution des oligomères cycliques.

Polyesters

Les polyesters semi-aromatiques sont de préférence choisis dans le groupe constitué des polyesters obtenus par polycondensation d'au moins un diacide aromatique ou un diester correspondant avec un diol aliphatique, cycloaliphatique ou aromatique.

Les diacides aromatiques et leur diesters peuvent être par exemple choisis parmi l'acide téréphtalique, le téréphtalate de diméthyle, l'acide isophtalique, l'isophtalate de diméthyle, l'acide 5-tert-butyle isophtalique, l'acide 4,4'-biphenyle dicarboxylique et les isomères de naphtalate de diméthyle. Les diols peuvent être par exemple choisis parmi l'éthylène glycol, le diéthylène glycol, le propylène glycol, le butylène glycol, l'isosorbide et le 1,4-cyclohexane diméthanol.

Les polyesters semi-aromatiques possédant masse moléculaire moyenne en nombre (Mn) préférentiellement comprise entre 5 000 g/mol et 20 000 g/mol sont particulièrement intéressants au regard de leurs propriétés mécaniques suffisantes et leur tenue lors des différents procédés de mise en forme.

Les polyesters semi-cristallins sont particulièrement préférés.

Selon un mode de réalisation particulièrement avantageux, les polyesters semi-aromatiques convenant à l'invention sont choisis dans le groupe constitué du polyéthylène téréphtalate (PET), du polybutylène téréphtlalate (PBT), du polytriméthylène téréphtalate (PTT) et du polyéthylène naphtalate (PEN).

Le PET et le PBT sont des polyesters semi-cristallins (Tf PET=245-250 °C, Tf PBT=225 °C).

Pour produire des polyesters de faible masse moléculaire, plusieurs voies distinctes suivantes existent. Une première voie consiste en la synthèse directe de polyesters en voie fondue en réacteur de polycondensation selon des procédés bien connus de l'homme de l'art du type « estérification directe » à partir des diacides et des diols ou « transestérification » à partir des diesters et des diols. Par exemple pour le PET, la synthèse en voie fondue en réacteur peut être réalisée à partir d'acide téréphtalique et d'éthylène glycol (estérification directe) ou à partir de téréphtalate de diméthyle et d'éthylène glycol (transestérification). Des exemples de procédés de synthèse sont décrits dans les Techniques de l'ingénieur 06/2004, J6488, 12 p. Cette voie permet ainsi un contrôle de la masse moléculaire par arrêt de la phase de polycondensation à un temps donné. Une deuxième voie consiste en l'hydrolyse, l'alcoolyse, l'acidolyse ou encore l'aminolyse de polyesters standard. Enfin, une troisième voie, notamment développée pour le PBT, consiste en la polymérisation de monomères cycliques CBT (butylène téréphtalate cyclique) pour la préparation de PBT par ouverture de cycle.

Les polyesters du type PET, PBT, PTT sont généralement synthétisés en voie fondue en réacteur de polycondensation à partir de procédés dits d'estérification directe (voie PTA) de l'acide téréphtalique avec un excès de glycol

ou de transestérification (voie DMT) du téréphtalate de diméthyle avec un excès de glycol.

Des polyesters de haute fluidité peuvent notamment être obtenus en contrôlant leur masse moléculaire lors de leur synthèse, notamment par un contrôle du temps de polymérisation, par un contrôle de la stœchiométrie des monomères ou encore par l'addition avant ou pendant la polymérisation de monomères modifiant la longueur des chaînes tels que notamment des limiteurs de chaîne monoalcool et/ou monoacide carboxylique. Il est également possible d'ajouter à la polymérisation des composés multifonctionnels pour apporter des ramifications.

Des polyesters peuvent aussi être obtenus par mélange, notamment en fondu, de polyesters avec des monomères modifiant la longueur des chaînes, tel que notamment des diols, diacides carboxyliques, monoalcool et/ou monoacides carboxyliques ou encore avec de l'eau, des diamines ou des monoamines.

La composition polymérique utilisée peut également comprendre un ou plusieurs copolyesters dérivés notamment des polyesters ci-dessus, ou un mélange de ces polyesters ou (co)polyesters.

Selon une variante préférée, la composition comprend au moins un polyamide ou un mélange de polyamides à haute fluidité et plus préférentiellement est constituée d'un polyamide.

Polyamide

Les polyamides considérés sont de préférence des polyamides semi-cristallins ou amorphes, qui possèdent une viscosité à l'état fondu inférieure ou égale à 50 Pa.s, de préférence allant de 1 à 30 Pa.s.

Cette viscosité fondue peut être mesurée à l'aide d'un rhéomètre plan-plan de diamètre 50 mm, sous un balayage en cisaillement par palier allant de 1 à 160 $s^{-1}$. Le polymère est sous forme de granulés d'une épaisseur 150 μm, éventuellement d'un film.

Le polyamide, lorsqu'il est semi-cristallin, est amené à une température allant de 10 à 100 °C au-dessus de son point de fusion, et la mesure est alors effectuée.

Le polyamide, lorsqu'il est amorphe, est amené à une température de 100 à 250 °C au-dessus de la température de transition vitreuse, et la mesure est alors effectuée.

A titre de polyamides à haute fluidité convenant à l'invention peuvent être cités ceux décrits dans les documents WO 03/029350 A1, WO 2005/061209 A1, WO 2008/155318 A1, WO 2010/034771 A1, WO 2011/003786 A1, WO 2011/003787 A1, WO 2011/073198 A1, WO 2011/073200 A1 et WO 2011/144592 A1.

Les polyamides peuvent notamment être semi-cristallins ou amorphes. Les polyamides semi-cristallins sont particulièrement préférés.

Les polyamides peuvent être notamment choisis dans le groupe comprenant les polyamides obtenus par polycondensation d'au moins un diacide carboxylique aliphatique linéaire avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leur mélange et (co)polyamides.

Le polyamide peut en particulier être choisi dans le groupe comprenant les polyamides obtenus par polycondensation d'au moins un diacide carboxylique aliphatique avec une diamine aliphatique ou cyclique comme le PA 6.6, PA 6.10, PA 6.12, PA 12.12, PA 4.6, MXD 6 ou entre au moins un diacide carboxylique aromatique et une diamine aliphatique ou aromatique comme les polytéréphtalamides, polyisophtalamides, polyaramides, ou leur mélange et (co)polyamides. Le polyamide de l'invention peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple PA 6, PA 7, PA 10T, PA 11, PA 12, ou leur mélange et (co)polyamides.

Les copolyamides dérivés notamment des polyamides ci-dessus, ou les mélanges de ces polyamides ou (co)polyamides peuvent également figurer parmi les polyamides utilisés. La polymérisation du polyamide utilisé est notamment réalisée selon les conditions opératoires classiques de polymérisation des polyamides, de manière continue ou discontinue.

Des polyamides de haute fluidité peuvent notamment être obtenus selon les méthodes enseignées dans la demande WO 2011/073198 A1.

Plus particulièrement, conviennent à l'invention, des polyamides ayant une masse moléculaire moyenne en nombre (Mn) d'au moins 6 000 g/mol, plus préférentiellement comprise entre 6 000 g/mol et 18 000 g/mol, ayant des propriétés mécaniques suffisantes et une certaine tenue lors des différents procédés de mises en forme.

Le polyamide, de préférence semi-cristallin, peut présenter une masse moléculaire moyenne en poids (Mw) comprise entre 6 000 g/mol et 25 000 g/mol.

On peut aussi utiliser des résines polyamides non évolutives de faible masse moléculaire pouvant être obtenues de différentes façons, notamment par déséquilibre de la stœchiométrie des monomères et/ou ajout de composants bloquants (il s'agit de molécules monofonctionnelles appelés également des limiteurs de chaîne, de concentration en groupement terminaux bloquants GTB) lors du procédé de polymérisation ou polycondensation des polyamides ; ou encore par ajout de monomères ou composants bloquants en mélange, notamment en extrusion. La masse moléculaire moyenne en poids Mw de ces résines polyamides est comprise entre 5 000 et 25 000 g/mol, préférentiellement comprise

entre 10 000 et 16 000 g/mol. La masse moléculaire en poids peut être mesurée selon les techniques citées dans la demande WO2011/073198 A1.

Ces polyamides présentent une concentration en groupements terminaux aminés (GTA) et/ou en groupements terminaux carboxyliques (GTC) inférieure ou égale à 20 meq/kg.

Ces résines sont dites non évolutives dans la mesure où on n'observe pas d'augmentation significative de leur masse moléculaire, ou de degré de polymérisation, lorsque celles-ci sont mises en œuvre dans le procédé de fabrication selon l'invention ; c'est-à-dire dans des conditions de températures et de pressions favorisant normalement une augmentation de la masse moléculaire. Cette masse moléculaire n'évolue pratiquement pas lors du procédé de fabrication des profilés en matériau composite en raison de l'absence, ou quasi absence, de groupements terminaux acide ou aminé. Ces résines sont, en ce sens, différentes des polymères partiellement polymérisés ou pré-polymères classiquement utilisées. Ces résines polyamides présentent préférentiellement une concentration en groupements terminaux aminés (GTA) et/ou en groupements terminaux carboxyliques (GTC) inférieure ou égale à 20 meq/kg, préférentiellement inférieure ou égale à 15 meq/kg, plus préférentiellement inférieure ou égale à 10 meq/kg, encore plus préférentiellement inférieure ou égale 5 meq/kg, tout particulièrement égale à 0 meq/kg. Un polyamide convenable pour la présente invention peut ainsi présenter par exemple un GTA de 0 meq/kg et un GTC de 500 meq/kg. Un polyamide convenable pour la présente invention peut ainsi présenter par exemple un GTA de 400 meq/kg et un GTC de 0 meq/kg. Un polyamide présentant une concentration en groupements terminaux aminés (GTA) inférieure ou égale à 5 meq/kg, présente généralement une concentration en groupements terminaux carboxyliques (GTC) comprise entre 100 et 1 000 meq/kg. Un polyamide présentant une concentration en groupements terminaux carboxyliques (GTC) inférieure ou égale à 5 meq/kg, présente généralement une concentration en groupements terminaux aminés (GTA) comprise entre 100 et 1 000 meq/kg.

Enfin, un polyamide utilisé peut également présenter un GTA = 400 meq/kg, un GTC de 0 meq/kg et une concentration en groupements terminaux bloquants GTB = 100 meq/kg.

Les quantités de groupements terminaux aminés (GTA) et/ou acides (GTC) peuvent être déterminées par dosage potentiométrique après complète dissolution du polyamide, par exemple dans le trifluoroéthanol, et ajout d'une base forte en excès. Les espèces basiques sont alors titrées par une solution aqueuse d'acide fort.

De telles résines peuvent être fabriquées de nombreuses manières et sont bien connues en soit de l'homme de l'art.

On peut par exemple fabriquer de telles résines par ajout en polymérisation, notamment au début en cours ou en fin de la polymérisation, des monomères du polyamide, en présence en outre de composés difonctionnels et/ou monofonctionnels. Ces composés difonctionnels et/ou monofonctionnels présentent des fonctions aminés ou acides carboxyliques capables de réagir avec les monomères du polyamide et sont utilisés dans des proportions telles que la résine polyamide résultante présente préférentiellement un GTA et/ou GTC inférieur à 20 meq/kg. Il est également possible de mélanger à un polyamide des composés difonctionnels et/ou monofonctionnels, notamment par extrusion, généralement une extrusion réactive, de façon à obtenir la résine polyamide utilisée. On peut utiliser tout type d'acides mono- ou di-carboxylique, aliphatiques ou aromatiques ou tous types d'amines mono- ou di-amines, aliphatiques ou aromatiques. On peut notamment utiliser comme composé monofonctionnel la n- dodécylamine et la 4-amino-2,2,6,6-tétraméthylpipéridine, l'acide acétique, l'acide laurique, la benzylamine, l'acide benzoïque, l'acide acétique et l'acide propionique. On peut notamment utiliser comme composé difonctionnel, l'acide adipique, l'acide téréphtalique, l'acide isophtalique, l'acide sébacique, l'acide azélaïque, l'acide dodécanedioïque, l'acide décanedioïque, l'acide pimélique, l'acide subérique, les dimères d'acides gras, la di-(éthylcarboxy) cyclohexanone, l'hexaméthylène diamine, la méthyl-5 pentaméthylène diamine, la métaxylylène diamine, la butanediamine, l'isophorone diamine, le 1,4 diamino cyclohexane, la 3,3',5-triméthyl hexaméthylènediamine. On peut également utiliser un excès d'acide adipique ou un excès d'hexaméthylène diamine pour la production d'un polyamide de type 66 présentant une fluidité en fondu élevée et une concentration en groupements terminaux aminés (GTA) et/ou en groupements terminaux carboxyliques (GTC) préférentiellement inférieure à 20 meq/kg.

Il est également possible de fortement diminuer les concentrations en groupements terminaux acides ou aminés d'un polyamide en opérant une finition sous vide en fin de polymérisation de manière à éliminer l'eau afin de consommer tout ou pratiquement tous les groupements terminaux ; et ainsi garantir que la résine n'évoluera plus dans le sens de l'augmentation de la masse moléculaire quelles que soient les conditions de mise en œuvre du profilé, notamment sous pression ou sous vide.

On peut aussi utiliser dans le procédé de la présente invention des résines polyamides bloquées non évolutives de faible masse moléculaire présentant une masse moléculaire moyenne en nombre Mn inférieur à 8 000 g/mol et/ou présentant une concentration en groupements terminaux aminés (GTA) supérieure à 25 meq/kg, une concentration en groupements terminaux acides (GTC) supérieure à 25 meq/kg et une concentration en groupements terminaux bloqués (GTB) compris selon la formule 2000000/(GTA+GTC+GTB) < 8 000 g/mol. Ces polyamides peuvent notamment être fabriqués en ajoutant en polymérisation du polyamide divers monomères mono- ou bifonctionnels.

On peut également utiliser comme polyamide de haute fluidité un polyamide étoile comprenant des chaînes

macromoléculaires étoiles et le cas échéant des chaînes macromoléculaires linéaires.

Le polyamide à structure étoile est un polymère comprenant des chaînes macromoléculaires étoiles, et éventuellement des chaînes macromoléculaires linéaires. Les polymères comprenant de telles chaînes macromoléculaires étoiles sont par exemple décrits dans les documents FR2743077, FR2779730, EP0682057 et EP0832149.

Ces composés sont connus pour présenter une fluidité améliorée par rapport à des polyamides linéaires. Les chaînes macromoléculaires étoiles comportent un cœur et au moins trois branches de polyamide. Les branches sont liées au cœur par une liaison covalente, par l'intermédiaire d'un groupement amide ou d'un groupement d'une autre nature. Le cœur est un composé chimique organique ou organométallique, de préférence un composé hydrocarboné comportant éventuellement des hétéroatomes et auquel sont reliées les branches. Les branches sont des chaînes polyamides. Les chaînes polyamides constituant les branches sont de préférence du type de celles obtenues par polymérisation des lactames ou aminoacides, par exemple de type polyamide 6. Le polyamide à structure comprend éventuellement, outre les chaînes étoiles, des chaînes polyamide linéaires. Dans ce cas, le rapport en poids entre la quantité de chaînes étoiles et la somme des quantités de chaînes étoiles et de chaînes linéaires est compris entre 0,5 et 1 bornes incluses. Il est de préférence compris entre 0,6 et 0,9.

Selon un mode de réalisation préférentiel, le polyamide à structure étoile, c'est-à-dire comprenant des chaînes macromoléculaires étoiles, est obtenu par copolymérisation d'un mélange de monomères comprenant au moins :

a) des monomères de formule générale I) suivante :

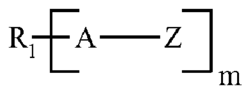 (I)

b) des monomères de formules générales (Ma) et (Mb) suivantes :

$X-R_2-Y$ (IIa)

ou

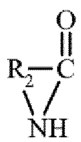 (IIb)

c) éventuellement des monomères de formule générale (III) suivante :

$Z-R_3-Z$ (III)

dans lesquelles :

- $R_1$ est un radical hydrocarboné comprenant au moins 2 atomes de carbone, linéaire ou cyclique, aromatique ou aliphatique et pouvant comprendre des hétéroatomes ;
- A est une liaison covalente ou un radical hydrocarboné aliphatique pouvant comprendre des hétéroatomes et comprenant de 1 à 20 atomes de carbone ;
- Z représente une fonction aminé primaire ou une fonction acide carboxylique ;
- Y est une fonction aminée primaire quand X représente une fonction acide carboxylique, ou Y est une fonction acide carboxylique quand X représente une fonction aminée primaire ;
- $R_2$, $R_3$ identiques ou différents représentent des radicaux hydrocarbonés aliphatiques, cycloaliphatiques ou aromatiques substitués ou non comprenant de 2 à 20 atomes de carbone et pouvant comprendre des hétéroatomes ; et
- m représente un nombre entier compris entre 3 et 8.

Par acide carboxylique, on entend les acides carboxyliques et leurs dérivés, tels que les anhydrides d'acide, les chlorures d'acide, ou les esters.

Des procédés d'obtention de ces polyamides étoiles sont décrits dans les documents FR2743077 et FR2779730. Ces procédés conduisent à la formation de chaînes macromoléculaires étoiles, en mélange avec éventuellement des chaînes macromoléculaires linéaires. Si on utilise un comonomère de formule (III), la réaction de polymérisation est avantageusement effectuée jusqu'à l'atteinte de l'équilibre thermodynamique.

Le monomère de formule (I) peut également être mélangé à un polymère en fondu, au cours d'une opération d'extrusion.

Ainsi, selon un autre mode de réalisation, le polyamide à structure étoile est obtenu par mélange en fondu, par exemple à l'aide d'un dispositif d'extrusion, d'un polyamide du type de ceux obtenu par polymérisation des lactames et/ou des aminoacides et d'un monomère de formule (I). De tels procédés d'obtention sont décrits dans les brevets EP0682070 et EP0672703.

Selon une caractéristique particulière, le radical $R_1$ est soit un radical cycloaliphatique tel que le radical tétravalent de cyclohexanonyle, soit un radical 1,1,1 -triyle-propane, 1,2,3-triyle-propane. Comme autres radicaux $R_1$ convenables pour l'invention on peut citer à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Avantageusement, au moins deux radicaux $R_2$ différents peuvent être employés dans les monomères de formule (II).

Le radical A est, de préférence, un radical méthylénique ou polyméthylénique tel que les radicaux éthyle, propyle ou butyle ou un radical polyoxyalkylènique tel que le radical polyoxyéthylènique.

Selon un mode de réalisation particulier, le nombre m est supérieur ou égal à 3 et avantageusement égal à 3 ou 4. La fonction réactive du composé multifonctionnel représentée par le symbole Z est une fonction capable de former une fonction amide.

De préférence, le composé de formule (I) est choisi parmi la 2,2,6,6-tétra-(β-carboxyéthyl)-cyclohexanone, l'acide trimésique, la 2,4,6-tri-(acide aminocaproique)-1,3,5-triazine et la 4-aminoéthyle-1,8-octanediamine.

Le mélange de monomères à l'origine des chaînes macromoléculaires étoiles peut comporter d'autres composés, tels que des limiteurs de chaînes, des catalyseurs, des additifs, tels que des stabilisants lumière ou des stabilisants thermiques.

Le polyamide utilisé peut également comprendre des motifs hydroxyaromatiques chimiquement liés à la chaîne du polyamide. On utilise pour ce faire un composé organique hydroxyaromatique qui est un composé comportant au moins un groupement hydroxyle aromatique et au moins une fonction capable de se lier chimiquement aux fonctions acides ou aminés du polyamide, qui une fois chimiquement lié à la chaîne polyamide, devient un motif hydroxyaromatique. Ce composé est de préférence choisi dans le groupe comprenant : l'acide 2-hydroxytéréphtalique, l'acide 5-hydroxyisophtalique, l'acide 4-hydroxyisophtalique, l'acide 2,5-dihydroxytéréphtalique, l'acide 4-hydroxyphénylacétique ou l'acide gallique, la L-Tyrosine, l'acide 4-hydroxyphénylacétique, le 3,5-diaminophénol, le 5-hydroxy m-xylylène diamine, l'amino-3 phénol, l'amino-3 méthyl-4 phénol, et l'acide hydroxy-3 amino-5 benzoïque.

Etoffe (renfort)

Comme évoqué précédemment, le procédé selon l'invention met en œuvre au moins une étoffe de renfort.

On entend par « étoffe », une surface textile obtenue par assemblage de fils ou de fibres solidarisés par un procédé quelconque, tel que notamment collage, feutrage, tressage, tissage, tricotage. Ces étoffes sont aussi désignées comme des réseaux fibreux ou filamenteux. Par fil, on entend un monofilament, un fil multifilamentaire continu, un filé de fibres, obtenu à partir d'un unique type de fibres ou de plusieurs types de fibres en mélange intime. Le fil continu peut être également obtenu par assemblage de plusieurs fils multifilamentaires. Par fibre, on entend un filament ou un ensemble de filaments coupés, craqués ou convertis. Les fils et/ou fibres de renfort selon l'invention sont préférentiellement choisis parmi les fils et/ou les fibres de carbone, de verre, d'aramides, de polyimides, de lin, de chanvre, de sisal, de coir, de jute, de kenaf, de bambou et/ou de leur mélange. Plus préférentiellement, les étoffes de renfort sont uniquement constituées de fils et/ou fibres de renfort choisis parmi les fils et/ou les fibres de carbone, de verre, d'aramides, de polyimides, de lin, de chanvre, de sisal, de coir, de jute, de kenaf, de bambou et/ou de leur mélange, en particulier, les étoffes de renfort sont uniquement constituées de fibres de verre.

Ces étoffes ont préférentiellement un grammage, c'est-à-dire le poids au mètre carré, compris entre 100 et 1 200 $g/m^2$, plus préférentiellement compris entre 100 et 1 000 $g/m^2$.

Leur structure peut être aléatoire, unidirectionnelle (1D), ou multidirectionnelle (2D, 2,5D, 3D ou autre).

En particulier, ces étoffes peuvent être choisies parmi les fibres unidirectionnelles, les tissus équilibrés ou non, les rubans, les tresses, les tissus sans embuvage (*Non Crimp Fabric*), et leurs mélanges.

De préférence, elles se présentent sous la forme de ruban.

Elles peuvent également être mises en œuvre pliées, c'est-à-dire sous la forme d'un ruban obtenu par la superposition de plusieurs plis de cette étoffe, afin d'accéder à des profilés dotés d'un taux de fibres élevé.

Les étoffes de renfort peuvent être préformées notamment en utilisant un liant à base de thermodurcissable ou de thermoplastique.

Il peut être utile afin de faciliter l'imprégnation d'utiliser au niveau de l'étoffe de renfort des tissus de drainage qui vont faciliter l'écoulement de la résine.

La composition polymérique et l'étoffe de renfort tels que décrits ci-dessus sont utilisées pour la fabrication d'un profilé selon un procédé d'injection-pultrusion.

Dans le procédé selon l'invention, la transformation de l'étoffe en profilé composite, est assurée en mode continu *via* un système de tirage qui permet de faire circuler l'étoffe à la vitesse souhaitée au travers du dispositif d'injection-pultrusion.

En effet, cet appareil, par exemple de type chenillard, maintient sous traction l'ensemble de l'étoffe du début à la fin du procédé.

Ainsi, l'étoffe de renfort est tirée en continu avec une vitesse de tirage d'au moins 0,4 $m.min^{-1}$ au cours du procédé, de préférence, allant de 0,4 à 12 $m.min^{-1}$, en particulier, de 0,5 à 8 $m.min^{-1}$ à l'aide d'un appareil de tirage disposé en aval de la filière dédiée à l'étape de conformation.

Il appartient à l'homme du métier d'ajuster la vitesse de tirage de telle sorte à ce qu'elle soit compatible avec une bonne imprégnation de l'étoffe, au regard notamment des caractéristiques de la composition polymérique ou de l'étoffe utilisées, du débit d'injection de la composition polymérique , ou encore de la géométrie souhaitée du profil à fabriquer.

Comme évoqué ci-dessus, la technologie de fabrication par injection-pultrusion selon l'invention requiert au moins les étapes suivantes c) et d) :

c) d'imprégnation d'une étoffe par injection de la composition polymérique fondue, et
d) de conformation de l'étoffe imprégnée pour former le profilé.

La réalisation des deux étapes d'imprégnation et de conformation peut être assurée à l'aide de plusieurs variantes de dispositifs.

Selon une première variante, ces deux étapes peuvent être réalisées en une filière commune.

Selon cette alternative, la filière commune comprend successivement au moins une zone d'entrée chaude, une zone d'imprégnation chaude dotée d'une chambre d'injection, une zone de contrôle thermique, et une zone de conformation où le profilé est refroidi de façon contrôlée. Cette filière est généralement avantageusement dotée d'un évent, par exemple positionné dans une zone à pression atmosphérique, directement en aval de la zone d'imprégnation, et/ou en amont de la zone de contrôle thermique, dédié à éliminer les résidus gazeux ou air occlus.

La figure 1 rend compte d'un dispositif mettant en œuvre une telle unique filière.

Selon une seconde variante, les deux étapes peuvent être réalisées dans deux filières distinctes et consécutives, espacées ou non.

Selon cette alternative, la première filière comprend successivement au moins une zone d'entrée chaude et une zone d'imprégnation chaude dotée d'une chambre d'injection, et la seconde filière peut comprendre une zone de conformation, ladite première filière étant le cas échéant dotée d'un évent directement en aval de la zone d'imprégnation, dédié à éliminer les résidus gazeux ou air occlus.

Selon une autre alternative de cette seconde variante, la seconde filière est constituée d'une calandreuse ou d'un train de plusieurs calandreuses à température contrôlée.

Etape c) d'imprégnation

Cette étape c) d'imprégnation est réalisée sur une étoffe possédant une température inférieure à 400 °C de préférence 350 °C, et supérieure ou égale à la température de ladite composition polymérique à l'état fondu.

Lors de cette étape, l'étoffe de renfort se trouve généralement à une température allant de 200 à 380 °C.

Quel que soit l'agencement du dispositif, l'étoffe doit être portée à la température requise avant l'étape d'imprégnation. La réalisation de ce chauffage relève des compétences de l'homme du métier, et peut être effectuée dans la zone d'entrée chaude de la filière dédiée à l'imprégnation.

L'étoffe peut également être préchauffée préalablement à l'étape b), notamment dans un four de préchauffage, à une température allant de 150 à 350 °C.

L'étape c) d'imprégnation est réalisée par injection de la composition polymérique fondue à travers l'étoffe disposée dans la zone d'imprégnation.

De préférence, l'imprégnation est totale, ce qui signifie qu'il ne reste aucune zone d'étoffe non imprégnée de la composition polymérique.

Pour ce faire, la composition polymérique peut être injectée à partir d'une chambre d'injection, communiquant avec la zone de filière dédiée à l'imprégnation de ladite étoffe.

Cette injection peut par exemple être réalisée au moyen d'une extrudeuse, de préférence, une extrudeuse à double vis, ou bien par l'intermédiaire d'une pompe de reprise.

De manière générale, la composition polymérique est introduite en entrée de l'extrudeuse et y est chauffée de telle sorte à ce qu'elle se trouve en sortie de l'extrudeuse à l'état fondu et à une viscosité inférieure ou égale à 50 Pa.s.

Il appartient à l'homme du métier d'ajuster la température, le débit et la pression d'injection de la composition polymérique de telle sorte qu'ils soient compatibles avec une bonne imprégnation de l'étoffe, au regard notamment des caractéristiques de la composition polymérique ou de l'étoffe utilisée, de la vitesse de tirage ou encore de la géométrie souhaitée du profil à fabriquer.

En ce qui concerne la température d'injection, la composition polymérique est préférentiellement chauffée lors de son passage dans l'extrudeuse, de telle sorte à ce qu'elle soit injectée au travers de l'étoffe, en sortie de celle-ci, à une température du même ordre que celle de l'étoffe lors de cette étape.

Ainsi, la composition polymérique est préférentiellement injectée à une température inférieure à 380 °C, et supérieure d'au moins 10 °C à la température de fusion de ladite composition polymérique si assimilable à un matériau semi-cristallin et supérieure d'au moins 100 °C à la température de transition vitreuse de ladite composition polymérique si assimilable à un matériau amorphe.

Elle se trouve donc généralement à une température allant de 200 à 380 °C lors de son injection.

Pour ce qui est du débit d'injection, il est de préférence ajusté pour réaliser des profilés comprenant un volume en composition polymérique allant de 25 à 65 % par rapport au volume total du profilé.

Quant à la pression, la composition polymérique peut être avantageusement injectée au travers de ladite étoffe à une pression allant de 0,1 à 20 bars, de préférence, de 0,2 à 12 bars, en particulier, de 0,5 à 10 bars.

Outre l'ajustement de la température, du débit et de la pression d'injection de la composition polymérique, l'imprégnation rapide et totale de l'étoffe peut être facilitée par un profil géométrique de la filière avec réduction de largeur (angle) et/ou systèmes type embarrage ou chicanes.

Selon une variante particulière, l'étoffe imprégnée peut subir consécutivement à l'étape d'imprégnation c), et préalablement à l'étape de conformation d) une étape c') de stabilisation en température, dans laquelle l'étoffe imprégnée de la composition polymérique à l'état fondu est portée à une température demeurant inférieure à 380 °C et supérieure d'au moins 10 °C à la température de fusion de ladite composition polymérique si assimilable à un matériau semi-cristallin et supérieure d'au moins 100 °C à la température de transition vitreuse de ladite composition polymérique si assimilable à un matériau amorphe.

Dans la variante d'un dispositif à deux filières, cette étape sera réalisée au sein de la filière dite chaude.

De même, le procédé peut comprendre une étape préliminaire de mise en forme de l'étoffe imprégnée de polymère selon un profilé géométrique défini, intervenant avant l'étape d) de conformation.

<u>Etape d) de conformation de l'étoffe imprégnée pour former le profilé</u>

Comme précisé précédemment, le profilé est conformé en étape d) avec un profil thermique tel que :

- sa température en surface est inférieure à la température de cristallisation de la composition polymérique si semi-cristalline et inférieure à 60 °C au-delà de la température de transition vitreuse de la composition polymérique (Tg) si amorphe, et
- sa température à cœur est supérieure à la température de cristallisation de la composition polymérique si semi-cristalline, et supérieure à 60 °C au-delà de la température de transition vitreuse de la composition polymérique (Tg) si amorphe.

Avantageusement, lorsque la composition polymérique est semi-cristalline, le profilé est conformé avec un profil thermique tel que sa température à cœur est inférieure à la température de fusion de ladite composition polymérique.

Selon une variante préférée, le profil thermique requis en étape c) pour ladite étoffe à conformer est ajusté à l'issue de l'étape de stabilisation b') si existante.

Dans un dispositif de pultrusion-injection, mettant en œuvre pour l'étape de conformation d) une filière distincte de la filière considérée pour l'imprégnation, ce profil thermique peut être ajusté avant l'entrée dans la filière dédiée à la conformation et avantageusement dans l'espace ménagé entre les deux filières et qui figure alors une zone de contrôle thermique. Cette zone de contrôle thermique est avantageusement dotée d'une température inférieure à la température de la première filière, en particulier à l'aide d'un dispositif d'isolation thermique et/ou de refroidissement externe.

Ce mode de refroidissement est notamment tout particulièrement intéressant lorsque les dimensions de l'objet pultrudé sont importantes de type plaques épaisses ou profilés de grande section par exemple mais également lorsque la vitesse de tirage est élevée par exemple supérieure à 1 m/min.

Avantageusement, un tel dispositif peut être sous la forme d'un spray vaporisant d'une solution aqueuse.

Lorsque ce type de dispositif de refroidissement est utilisé, la zone de contrôle thermique est de préférence à

l'air libre, de telle sorte que le spray aqueux soit vaporisé directement sur le matériau à conformer.

Il appartient à l'homme du métier d'ajuster le débit et la température de vaporisation du spray de refroidissement, notamment au regard des dimensions du profilé à fabriquer, de la longueur de la zone de contrôle thermique, de la température du matériau à conformer en sortie de la première filière, et de la température souhaitée à la surface et au cœur de ce matériau pour réaliser l'étape de conformation.

Additif

Selon une variante de réalisation, le procédé de l'invention met en œuvre au moins un additif habituellement introduit dans les matériaux à base de polymère thermoplastique.

Ainsi, on peut citer à titre d'exemple d'additifs les stabilisants thermiques, les stabilisants UV, les antioxydants, les lubrifiants, les pigments, les colorants, les plastifiants, les charges de renfort, les agents ignifugeants et les agents modifiant la résistance aux chocs, en particulier un agent lubrifiant.

En particulier, le procédé met en œuvre au moins un additif lubrifiant, notamment en étape c) et/ou d).

Ainsi, l'utilisation d'un agent lubrifiant est particulièrement avantageuse dans la mesure où un tel additif permet d'accroître la réduction des frottements entre le profilé et la paroi de la filière lors de l'étape de conformation. La force de tirage de l'étoffe de renfort est ainsi plus constante et réduite.

De préférence un tel agent lubrifiant est choisi parmi les auxiliaires de production de polymères tels que le polyfluorure de vinylidène ou le polytétrafluoroéthylène, les plastifiants tels que les oligomères d'ester cyclique(s), les charges minérales connues pour leurs propriétés lubrifiantes ou anti-adhésion telles que le talc, le mica, et le graphite, ainsi que leurs mélanges, en particulier le graphite.

La mise en œuvre d'un agent lubrifiant, notamment tel que défini ci-dessus, peut être réalisée dans plusieurs zones du procédé.

Ainsi, selon une première variante, il est présent en association avec le ou les polymères thermoplastiques formant la composition polymérique fondue dédiée à imprégner l'étoffe, dans la zone d'imprégnation.

Selon cette variante, l'agent lubrifiant peut par exemple être mélangé avec le ou les polymères thermoplastiques considérés au niveau de l'extrudeuse, préalablement à son injection au travers de l'étoffe.

Toujours selon cette variante, l'agent lubrifiant et le composant polymère(s) thermoplastique(s) peuvent être mis en œuvre dans un rapport pondéral agent lubrifiant/polyamide allant de 0,1/99,9 à 10/90, de préférence de 0,5/99,5 à 5/95.

Selon une deuxième variante, l'agent lubrifiant peut être mis en œuvre dans l'espace ménagé entre les deux filières, dans le cas spécifique d'une installation à deux filières.

En particulier, il peut être présent dans une solution aqueuse utilisée en tant que dispositif de refroidissement externe.

Enfin, selon une troisième variante, l'agent lubrifiant peut être introduit à l'état liquide dans la zone de conformation, quel que soit l'agencement de l'installation d'inj ection-pultrusion.

Il est alors injecté directement au sein de la zone de conformation via un ou plusieurs point(s) d'injection disposés dans cette zone.

Dans cette troisième variante, considérant l'utilisation d'un additif lors de l'étape de conformation, cet agent peut être, outre ceux évoqués ci-dessus, un polymère thermoplastique à l'état liquide, doté d'un point de fusion inférieur à la température de cristallisation du ou des polymères thermoplastiques mis œuvre pour l'imprégnation et pour réaliser le profilé.

L'effet lubrifiant d'un tel polymère est assuré par le fait qu'il est à l'état liquide, contrairement à la surface du profilé lors de l'étape de conformation.

En outre, un tel polymère peut, au-delà de son action lubrifiante, conférer au profilé des spécificités de surface telles que par exemple, une hydrophobie de surface, une texture spécifique facilitant le soudage du profilé, un état de surface déterminé ou une couleur particulière.

De telles spécificités peuvent être procurées par le polymère lui-même ou alors par des charges et/ou additifs, tels que des pigments ou des charges conductrices, formulés avec le polymère injecté.

Ce polymère peut être semi-cristallin ou amorphe, et présente avantageusement un minimum de compatibilité avec le ou les polymères thermoplastiques constitutifs du profilé, de telle sorte à ne pas altérer la formation du profilé.

Ainsi, les polymères préférés présentent un bas point de fusion, c'est-à-dire allant de 100 à 220 °C et/ou sont fonctionnalisés avec de l'anhydride maléique ou autre agent compatibilisant.

## PROFILE

Le profilé obtenu à l'issue de l'étape de conformation d) est doté, dans toute son épaisseur, d'une température inférieure à la température de cristallisation de la composition polymérique thermoplastique si semi-cristalline, et inférieure à 60 °C au-delà de la température de transition vitreuse de la composition polymérique thermoplastique si amorphe.

Généralement, cette étape de conformation d) est suivie d'une étape de refroidissement dans laquelle le profilé est refroidi, dans toute son épaisseur à une température allant de 150 °C à 50 °C. Cette étape peut être réalisée par tout procédé connu de l'homme de l'art.

Le profilé obtenu à l'issue de l'étape d) de conformation ou à la fin du procédé de l'invention peut notamment comprendre un volume d'étoffe de renfort allant de 35 à 75 %, en particulier, allant de 50 à 63 %, par rapport au volume total du profilé.

Sa section peut être pleine ou creuse, et à géométrie simple ou complexe. A ce titre, la zone de conformation selon l'alternative filière unique, ou la filière dédiée à la conformation possède une géométrie ajustée pour procurer le profilé attendu.

Par exemple, un profilé à section simple, de type rectangulaire peut avoir une largeur allant jusqu'à 2 m, voire 2,56 m (100 pouces), et une épaisseur minimale de 0,2 mm allant jusqu'à 10 mm, voire 15 mm ou 25 mm (1 pouce).

Des sections à géométries complexes peuvent notamment être carrées, ou alors en U ou I (par exemple un profil normal IPN), de type oméga, ou encore tout type de géométrie.

A titre de profilé à section creuse figurent notamment les profilés de type tube circulaire ou rectangulaire.

Le profilé à matrice polymérique thermoplastique peut comprendre un volume d'étoffe de renfort allant de 35 à 75 %, en particulier, allant de 50 à 63 %, par rapport au volume total du profilé, afin d'obtenir de hautes performances mécaniques.

## APPLICATIONS

Les profilés obtenus par le procédé de l'invention peuvent être employés dans de nombreux domaines tels que l'aéronautique, l'automobile, l'industrie de l'énergie, les travaux publics ou engins agricoles, l'industrie des sports et loisirs. Ces structures peuvent être utilisées pour réaliser des articles de sports, des structures renforçantes (châssis) ou bien pour réaliser des surfaces diverses telles que des planchers spéciaux, des cloisons, des éléments de carrosserie de véhicules, ou des panneaux. Dans l'aéronautique ces structures sont utilisées notamment au niveau des carénages (fuselage, aile, empennage). Dans l'automobile, elles sont utilisées par exemple au niveau des châssis, planchers, poutre (bumpers) ou des supports tels que les blocs avant ou les blocs arrière.

Les exemples et la figure qui suivent sont présentés à titre illustratif et non limitatif du domaine de l'invention.

### Matériel et méthodes

Dans les exemples qui suivent, le procédé de fabrication en continu par pultrusion d'un profilé est effectué à l'aide d'une installation de pultrusion 10 telle qu'illustrée sur la figure 1.

L'installation d'injection-pultrusion 10 illustrée comporte tout d'abord des cantres 12 recevant des rouleaux ou bobines d'étoffes de renfort 14 à imprégner d'une matrice polymérique et à mettre en forme selon la géométrie de profilé souhaité.

Les étoffes de renfort sont tendues et tirées à travers l'installation d'injection-pultrusion 10 par un dispositif de tirage 16, ici du type à chenillard. La vitesse des étoffes de renfort à travers l'installation d'injection-pultrusion est supérieure à 0,4 m/min, de préférence comprise entre 0,8 et 8 m/min.

À travers l'installation d'injection-pultrusion, les étoffes de renfort 14 sont tout d'abord guidées par un dispositif de guidage 18, pour les positionner les unes par rapport aux autres, notamment pour les superposer.

Les étoffes de renfort 14 traversent ensuite un four de préchauffage 22 dédié à chauffer l'étoffe de renfort, puis une filière 20.

Cette filière 20 comporte tout d'abord une zone d'entrée chaude 24, dans laquelle les étoffes sont portées à la température requise pour réaliser l'étape d'imprégnation, par exemple au moyen d'un four, puis une zone d'imprégnation chaude dotée d'une chambre d'injection 25 dans laquelle les étoffes de renfort 14, chaudes, sont imprégnées d'un polymère fondu. Pour ce faire, le polymère est injecté dans la chambre d'injection 25 sous faible pression, typiquement inférieure à 20 bars. Cette injection sous faible pression peut par exemple être réalisée au moyen d'une extrudeuse 26 éventuellement avec une pompe de reprise. L'extrudeuse 26 peut par exemple être une extrudeuse double vis, notamment lorsque le polymère dont on veut imprégner les étoffes de renfort, est un polymère thermoplastique sous forme de granulés (compound) ou poudre, le système devant délivrer la quantité de polymère adaptée à l'imprégnation complète du renfort, et ce pour les vitesses de tirage utilisées. La régulation pression/débit au niveau de l'injection de polymère thermoplastique est réalisée par les différentes techniques connues de l'homme de l'art à l'image de doseurs ou de pompes.

La filière 20 comporte ensuite une zone de contrôle thermique 28 dans laquelle les étoffes de renfort 14 imprégnées sont refroidies, et éventuellement déformées afin de passer d'une section plane à géométrie 3D, pour que le profilé puisse être conformé selon le gradient thermique requis en étape d), puis enfin, une zone de conformation 29

possédant la géométrie correspondant à celle souhaitée pour la section du profilé 30. Le profilé 30 peut ensuite être découpé à la longueur souhaitée, en aval du dispositif de tirage 16 par tout moyen de découpage approprié, comme une scie par exemple.

La filière 20 peut être munie d'évents en aval de la zone d'imprégnation, et en amont de la zone de contrôle thermique, dédiés à éliminer les résidus gazeux ou air occlus.

Par ailleurs, à la place d'une unique filière 20 telle que décrite précédemment, l'installation d'injection-pultrusion 10 peut comporter plusieurs filières, notamment une filière dite « chaude » dans laquelle les étoffes de renfort 14 sont chauffées et imprégnées de polymère injecté fondu, et une filière dite « froide » ou bien un train de calandreuses, où les étoffes de renforts ainsi imprégnées sont mises en forme. Entre les deux filières, un espace figurant une zone de contrôle thermique est ménagé, permettant d'atteindre le profil thermique requis pour la conformation du profilé.

Plus précisément, dans les exemples qui suivent, le procédé de fabrication d'un profilé est effectué à l'aide d'une installation d'injection-pultrusion 10 Pultrex comprenant :

- un four de préchauffage d'une longueur de 2 m 50, régulé en température à 300 °C (SAT),
- un dispositif de tirage régulé (PULTREX),
- une extrudeuse double vis Leistritz 18D, et
- une filière destinée à obtenir un profilé de section 50*4 $mm^2$ constituée d'une zone sur 100 mm d'arrivée + réchauffage des renforts, d'une zone sur 310 mm jusqu'au niveau d'injection du polymère fondu, puis une zone en biseau de 365 mm, une zone intermédiaire, et une zone de conformation de 250mm.

NB : dans le cas de la réalisation d'un profilé de section complexe, la zone intermédiaire est alors une zone de changement de forme plat -> géométrie finale.

Ce procédé met en œuvre dans les exemples suivants un ruban de grammage 800 $g/m^2$ (équilibré 0/90) doté d'une largeur de 50 mm, (Référence : UDV 12.45 10/800/ 0-50, ATG) en fibres de verre, en tant qu'étoffe de renfort. Sept plis de ruban sont utilisés, afin d'obtenir un taux volumique de fibres d'environ 50 %, et le ruban est tiré en continu au cours du procédé avec une vitesse de tirage de à 0,7 $m.min^{-1}$.

Les conditions d'injection au niveau de l'extrudeuse sont réglées afin d'alimenter la filière à 80 g/min (4,8 kg/h).

La température au niveau de l'étape de conformation est réglée afin d'avoir une température en surface du profilé inférieure au point de fusion (pour le polyamide PA66 : T < 260 °C), et de préférence inférieure au point de cristallisation, tout en conservant une température suffisante à cœur du profilé (T supérieure à la température de cristallisation Tc, soit pour le polyamide PA66 220 °C). Le profil de température a été vérifié lors d'un essai spécifique par introduction d'un thermocouple au sein du profilé.

<u>Exemple 1 : Effet du gradient de température requis selon l'invention</u>

Un procédé de fabrication en continu par pultrusion d'un profilé est réalisé à l'aide du dispositif décrit ci-dessus en mettant en œuvre le polyamide A, à savoir, le PA66 disponible auprès de SOLVAY. Ce polyamide possède une température de fusion de 260 °C, une température de cristallisation de 220 °C, et une viscosité en fondu inférieure à 20 Pa.s à une température de 285 °C et sous un taux de cisaillement de 10 $s^{-1}$.

Dans la zone d'entrée chaude, le ruban est porté à la température souhaitée pour réaliser l'étape d'imprégnation, à savoir, 300 °C.

Il est maintenu à cette température jusqu'à imprégnation totale de l'étoffe.

Dans la zone d'imprégnation, le polyamide A est injecté à une température de 290 °C.

Dans un premier essai, dit témoin, l'étoffe imprégnée entre alors dans une zone de contrôle thermique à l'issue de laquelle sa température en surface est réduite à une température supérieure à la température de cristallisation du polyamide utilisé (220 °C) et sa température à cœur reste à une température plus élevée proche du point de fusion de ce polyamide (260 °C). Dans la zone de conformation, la température en surface est supérieure à la température de cristallisation du polyamide, et la température à cœur est plus élevée (proche du point de fusion).

Dans un deuxième essai, conforme à l'invention, l'étoffe imprégnée entre alors dans une zone de contrôle thermique à l'issue de laquelle sa température en surface est ajustée à une température inférieure à la température de cristallisation du polyamide utilisé, et sa température à cœur est ajustée à 250 °C environ soit inférieure au point de fusion de ce polyamide mais au-dessus du point de cristallisation. Dans la zone de conformation, la température en surface est inférieure à la température de cristallisation du polyamide, et la température à cœur reste plus élevée (proche du point de fusion).

Les profilés obtenus possèdent un taux volumique de fibres de 50 % calculé initialement et confirmé par perte de masse après calcination haute température.

Le taux de gonflement du profilé est déterminé à l'aide de la relation suivante :

Taux de gonflement (en %) = (écart entre l'épaisseur du profilé final et l'épaisseur de la filière)/(épaisseur de la filière)*100

| Polyamide considéré | Température en surface du profilé lors de l'étape de conformation | Taux de gonflement (en %) |
|---|---|---|
| Polyamide A doté d'une température de cristallisation de 220 °C | 250 °C | 20 |
| | inférieure à 220 °C | 0 à 2,5 |

Il apparaît que les profilés obtenus conformément au procédé selon l'invention, c'est-à-dire ceux qui sont conformés avec un profil de température tel que leur température en surface est inférieure à la température de cristallisation du polyamide utilisé, possèdent un taux de gonflement faible voire négligeable, compris entre 0 et 5 %.
En revanche, lorsque l'étape de conformation est réalisée sur une étoffe imprégnée dotée d'une température en surface supérieure à la température de cristallisation du polyamide utilisé (et donc plus élevée à cœur), on observe un phénomène de gonflement dû à la relaxation des plis enrobés de polyamide après le passage dans la filière.
Ce gonflement conduit à une surcôte de l'épaisseur du profilé, et peut en outre générer une importante porosité inter-plis (cavités).

Exemple 2 : Effet de la viscosité du polyamide

Un procédé de fabrication en continu par pultrusion d'un profilé est réalisé à l'aide du dispositif décrit ci-dessus en mettant en œuvre soit le polyamide B soit le polyamide C appartenant tous deux à la gamme Technyl® PA66 commercialisés par SOLVAY.
Ces deux polyamides, présentent la même température de fusion à savoir 260 °C, une température de cristallisation relativement similaire (autour de 220 °C), et une viscosité à l'état fondu différente, conforme ou non à la présente invention.
Le polyamide B, non formulé dit témoin possède une viscosité en fondu de 60 à 70 Pa.s, et le polyamide C, conforme à l'invention, possède une viscosité en fondu de 15 à 20 Pa.s.
Pour ces deux polyamides, la viscosité a été mesurée à une température de 275 °C et sous 10 $s^{-1}$.
Dans la zone d'entrée chaude, le ruban est porté à la température souhaitée pour réaliser l'étape d'imprégnation, à savoir 290 °C.

Il est maintenu à cette température jusqu'à imprégnation totale de l'étoffe.

Dans la zone d'imprégnation, le polyamide B ou le polyamide C est injecté à une température de 290 °C.
L'étoffe imprégnée entre alors dans une zone de contrôle thermique à l'issue de laquelle sa température en surface est ajustée à une température inférieure à 220 °C et sa température à cœur est ajustée à une température intermédiaire entre la température de cristallisation et de fusion du polyamide utilisé, typiquement 250 °C.
Les profilés obtenus possèdent un taux volumique de fibres de 50 %, calculé initialement et confirmé par perte de masse après calcination haute température.
Le taux de vide (en %) est mesuré par pesée (Norme ASTM D2734-94), et éventuellement par microscopie électronique à balayage (MEB). Le taux d'imprégnation est ensuite calculé selon la relation suivante : taux d'imprégnation (en %) = 100 - taux de vides (en %).

| Polyamide considéré | Viscosité en fondu du polyamide (à 275°C et sous 10 $s^{-1}$) (en Pa.s) | Taux d'imprégnation (en %) |
|---|---|---|
| Polyamide B (témoin) | 60 à 70 | 60 à 90 |
| Polyamide C (conforme à l'invention) | 15 à 20 | 95 à 99 |

Ainsi, pour une vitesse de tirage de 0,7 m/min et un taux volumique de fibres de 50 %, le taux d'imprégnation est bien plus élevé avec un polyamide conforme à l'invention, comparativement à un polyamide doté d'une viscosité

supérieure à 50 Pa.s.

Exemple 3. Effet de l'ajout d'un additif lubrifiant

Un procédé de fabrication en continu par pultrusion d'un profilé est réalisé à l'aide du dispositif décrit ci-dessus en mettant en œuvre soit le polyamide C de l'exemple 2, soit le polyamide D.
Le polyamide D comprend 98 % en poids de polyamide C, et 2 % en poids de Graphite (Timcal SFG6) de granulométrie moyenne 6 microns.
Il possède les mêmes températures de fusion et de cristallisation, que le polyamide C. Il est doté d'une viscosité en fondu de 20 à 25 Pa.s à une température de 275 °C et sous 10 $s^{-1}$.
Dans la zone d'entrée chaude, le ruban est porté à la température souhaitée pour réaliser l'étape d'imprégnation, à savoir 290 °C. Il est maintenu à cette température jusqu'à imprégnation totale de l'étoffe.
Dans la zone d'imprégnation, le polyamide C ou le polyamide D est injecté à une température de 290 °C.
L'étoffe imprégnée entre alors dans une zone de contrôle thermique à l'issue de laquelle sa température en surface est ajustée à une température inférieure à la température de cristallisation du polyamide utilisé, et sa température à cœur est ajustée à une température supérieure, proche du point de fusion du polyamide, typiquement vers 250 °C.
La force de tirage est sensiblement diminuée : typiquement, elle passe d'un niveau 7 à 10 kN à moins de 3 kN.
Les profilés obtenus possèdent un taux volumique de fibres de 50 % calculé initialement et confirmé par mesure de perte de masse après calcination.
Cet exemple met en exergue le fait que la mise en œuvre du polyamide avec un agent lubrifiant permet avantageusement d'améliorer la stabilité du procédé de fabrication d'un profilé.
En effet, lorsque le polyamide utilisé est le polyamide D, il est possible de réaliser plus de 200 m de profilé en continu de façon stable avec une force de tirage constante, inférieure à 5 kN. Le profilé obtenu est doté d'un bel aspect avec une géométrie contrôlée.

**Revendications**

**1.** Procédé de fabrication en continu par injection-pultrusion d'un profilé (30) en matériau composite à partir d'au moins une étoffe de renfort (14) et d'au moins un polymère thermoplastique, ledit procédé comprenant au moins les étapes consistant à :

- a) disposer d'une composition polymérique thermoplastique de viscosité inférieure ou égale à 50 Pa.s et à base d'un ou plusieurs polymères thermoplastiques à l'état fondu et,
- b) disposer d'une étoffe de renfort à une température inférieure à 400 °C de préférence 350 °C, et supérieure ou égale à la température de ladite composition polymérique à l'état fondu,
- c) imprégner ladite étoffe de l'étape b) avec ladite composition polymérique de l'étape a) ;
- d) conformer ladite étoffe imprégnée de ladite composition polymérique pour former ledit profilé,

procédé dans lequel :

- i) ladite étoffe est tirée en continu avec une vitesse de tirage d'au moins 0,4 $m.min^{-1}$ au cours dudit procédé ;
- ii) l'étape d'imprégnation c) est réalisée par injection de ladite composition polymérique à l'état fondu au travers de ladite étoffe ;
- iii) ladite étoffe imprégnée de ladite composition polymérique est conformée en étape d) avec un profil thermique tel que :
- sa température en surface est inférieure à la température de cristallisation de ladite composition polymériquesi semi-cristalline et inférieure à 125 °C au-delà de la température de transition vitreuse (Tg) de ladite composition polymérique si amorphe, et
- sa température à cœur est supérieure à la température de cristallisation de ladite composition polymérique si semi-cristalline et supérieure à 50 °C au-delà de la température de transition vitreuse (Tg) de ladite composition polymérique si amorphe ; dans lequel les étapes d'imprégnation c) et de conformation d) se déroulent dans une filière commune comprenant successivement une zone d'entrée chaude (24), une zone d'imprégnation chaude dotée d'une chambre d'injection (25), une zone de contrôle thermique (28), et une zone de conformation (29) ;
ou les étapes d'imprégnation c) et de conformation d) se déroulent dans deux filières distinctes et consécutives, espacées, la première filière comprenant successivement une zone d'entrée chaude et une zone d'imprégnation chaude dotée d'une chambre d'injection, la seconde filière comprenant une zone de conformation, une zone

de contrôle thermique étant ménagée entre les deux filières ;
dans lequel ladite étoffe imprégnée de ladite composition polymérique est refroidie dans ladite zone de contrôle thermique ;
et dans lequel la viscosité, à l'état fondu, est mesurée à l'aide d'un rhéomètre plan-plan de diamètre 50 mm, sous un balayage en cisaillement par palier allant de 1 à 160 $s^{-1}$ ; le matériau polymérique à mesurer est sous forme de granulés, éventuellement d'un film d'une épaisseur 150 $\mu$m ; lorsque la composition polymérique est assimilable à un matériau semi-cristallin, elle est amenée à une température allant de 10 à 100 °C au-dessus de son point de fusion, et la mesure est alors effectuée ; lorsque la composition polymérique est assimilable à un matériau amorphe, elle est amenée à une température de 100 à 250 °C au-dessus de la température de transition vitreuse, et la mesure est alors effectuée.

2. Procédé selon la revendication précédente, comprenant en outre une étape de refroidissement consécutive à l'étape de conformation d), dans laquelle ledit profilé est refroidi, dans toute son épaisseur à une température allant de 150 °C à 50 °C.

3. Procédé selon l'une quelconque des revendications précédentes, dans lequel ladite étoffe est tirée en continu avec une vitesse de tirage allant de 0,4 à 12 $m.min^{-1}$, de préférence, de 0,5 à 8 $m.min^{-1}$ à l'aide d'un appareil de tirage (16) disposé en aval de la filière (20) dédiée à l'étape de conformation.

4. Procédé selon l'une quelconque des revendications précédentes, dans lequel ladite composition polymérique mise en œuvre en étape c) possède à l'état fondu une viscosité allant de 1 à 30 Pa.s, de préférence de 1 à 25 Pa.s.

5. Procédé selon l'une quelconque des revendications précédentes dans lequel ladite composition est formée d'au moins un polyamide semi-cristallin ou amorphe ou d'un de leurs mélanges.

6. Procédé selon la revendication précédente, dans lequel ledit polyamide, de préférence semi-cristallin, présente une masse moléculaire moyenne en poids Mw comprise entre 6 000 et 25 000 g/mol, mesurée par chromatographie sur gel perméable.

7. Procédé selon l'une quelconque des revendications précédentes, dans lequel les étapes d'imprégnation c) et de conformation d), se déroulent dans une filière commune, ladite filière étant dotée d'un évent, par exemple positionné dans une zone à pression atmosphérique, directement en aval de la zone d'imprégnation, et/ou en amont de la zone de contrôle thermique, dédié à éliminer les résidus gazeux ou air occlus.

8. Procédé selon l'une quelconque des revendications 1 à 6, dans lequel les étapes d'imprégnation c) et de conformation d), se déroulent dans deux filières distinctes et consécutives, ladite première filière étant dotée d'un évent directement en aval de la zone d'imprégnation, dédié à éliminer les résidus gazeux ou air occlus.

9. Procédé selon l'une quelconque des revendications 1 à 6, dans lequel les étapes d'imprégnation c) et de conformation d), se déroulent dans deux filières distinctes et consécutives, la seconde filière étant constituée d'une calandreuse ou d'un train de plusieurs calandreuses à température contrôlée.

10. Procédé selon l'une quelconque des revendications précédentes, mettant en œuvre en outre au moins un agent lubrifiant, notamment en étape c) et/ou d), de préférence choisi parmi les auxiliaires de production de polymères tels que le polyfluorure de vinylidène ou le polytétrafluoroéthylène, les plastifiants tels que les oligomères d'ester cyclique(s), les charges minérales telles que le talc, le mica et le graphite et leurs mélanges.

11. Procédé selon l'une quelconque des revendications précédentes, dans lequel ledit profilé formé possède un volume d'étoffe de renfort allant de 35 à 75 %, en particulier, allant de 50 à 63 %, par rapport au volume total du profilé.

**Patentansprüche**

1. Verfahren zur kontinuierlichen Herstellung eines Profils (30) aus Verbundwerkstoff durch Injektion-Pultrusion ausgehend von mindestens einem Verstärkungsstoff (14) und mindestens einem thermoplastischen Polymer, wobei das Verfahren mindestens die folgenden Schritte umfasst:

a) Bereitstellen einer thermoplastischen Polymerzusammensetzung mit einer Viskosität kleiner oder gleich 50

Pa.s und auf Basis eines oder mehrerer thermoplastischer Polymere im geschmolzenen Zustand und
b) Bereitstellen eines Verstärkungsstoffs mit einer Temperatur von weniger als 400 °C, bevorzugt 350 °C, und größer oder gleich der Temperatur der Polymerzusammensetzung im geschmolzenen Zustand,
c) Tränken des Verstärkungsstoffs aus Schritt b) mit der Polymerzusammensetzung aus Schritt a);
d) Umformen des mit der Polymerzusammensetzung getränkten Verstärkungsstoffs zum Bilden des Profils, wobei bei dem Verfahren:

i) der Stoff während des Verfahrens kontinuierlich mit einer Ziehgeschwindigkeit von mindestens 0,4 $m.min^{-1}$ gezogen wird;
ii) der Schritt c) des Tränkens durch Injizieren der Polymerzusammensetzung im geschmolzenen Zustand durch den Stoff hindurch ausgeführt wird;
iii) der mit der Polymerzusammensetzung getränkte Stoff in Schritt d) mit einem solchen Temperaturprofil umgeformt wird, dass:

- seine Oberflächentemperatur geringer als die Kristallisationstemperatur der Polymerzusammensetzung, wenn teilkristallin, ist und weniger als 125 °C oberhalb der Glasübergangstemperatur (Tg) der Polymerzusammensetzung, wenn amorph, liegt und
- seine Kerntemperatur höher als die Kristallisationstemperatur der Polymerzusammensetzung, wenn teilkristallin, ist und mehr als 50 °C oberhalb der Glasübergangstemperatur (Tg) der Polymerzusammensetzung, wenn amorph, liegt;

bei dem die Schritte des Tränkens c) und Umformens d) in einem gemeinsamen Werkzeug ablaufen, das hintereinander eine heiße Einlaufzone (24), eine heiße Tränkzone mit einer Injektionskammer (25), eine Temperaturregelungszone (28) und eine Umformzone (29) umfasst;
wobei die Schritte des Tränkens c) und Umformens d) in zwei verschiedenen und aufeinander folgenden, beabstandeten Werkzeugen ablaufen, wobei das erste Werkzeug eine heiße Einlaufzone und eine mit einer Injektionskammer ausgestattete Tränkzone umfasst, wobei das zweite Werkzeug eine Umformzone umfasst, wobei zwischen den beiden eine Temperaturregelungszone ausgebildet ist;
bei dem der mit der Polymerzusammensetzung getränkte Stoff in der Temperaturregelungszone abgekühlt wird; und bei dem die Viskosität, im geschmolzenen Zustand, mithilfe eines Platte-Platte-Rheometers mit einem Durchmesser von 50 mm unter einer Scherrate je Stufe von 1 bis 160 $s^{-1}$ gemessen wird; das zu messende Polymermaterial in Form von Granulat, gegebenenfalls eines Films mit einer Dicke von 150 μm vorliegt; wenn die Polymerzusammensetzung einem teilkristallinen Material gleichzusetzen ist, sie auf eine Temperatur von 10 bis 100 °C oberhalb ihres Schmelzpunkts gebracht wird; wenn die Polymerzusammensetzung einem amorphen Material gleichzusetzen ist, sie auf eine Temperatur von 100 bis 250 °C oberhalb der Glasübergangstemperatur gebracht wird und die Messung daraufhin durchgeführt wird.

**2.** Verfahren nach dem vorhergehenden Anspruch, umfassend ferner einen Schritt des Abkühlens nach dem Umformschritt d), bei dem das Profil in seiner gesamten Dicke auf eine Temperatur von 150 °C bis 50 °C abgekühlt wird.

**3.** Verfahren nach einem der vorhergehenden Ansprüche, bei dem der Stoff kontinuierlich mit einer Ziehgeschwindigkeit von 0,4 bis 12 $m.min^{-1}$, bevorzugt von 0,5 bis 8 $m.min^{-1}$, mithilfe einer Zieheinrichtung (16) gezogen wird, die stromab des für den Umformschritt vorgesehenen Werkzeugs (20) angeordnet ist.

**4.** Verfahren nach einem der vorhergehenden Ansprüche, bei dem die in Schritt c) verarbeitete Polymerzusammensetzung im geschmolzenen Zustand eine Viskosität von 1 bis 30 Pa.s, bevorzugt von 1 bis 25 Pa.s, besitzt.

**5.** Verfahren nach einem der vorhergehenden Ansprüche, bei dem die Polymerzusammensetzung aus mindestens einem teilkristallinen oder amorphen Polyamid oder aus einer ihrer Mischungen gebildet wird.

**6.** Verfahren nach dem vorhergehenden Anspruch, bei dem das Polyamid, bevorzugt teilkristallin, eine mittlere Molekülmasse in Gewicht Mw zwischen 6.000 und 25.000 g/mol, gemessen durch Gelpermeationschromatographie, aufweist.

**7.** Verfahren nach einem der vorhergehenden Ansprüche, bei dem die Schritte des Tränkens c) und des Umformens d) in einem gemeinsamen Werkzeug ablaufen, wobei das Werkzeug mit einer Entlüftung ausgestattet ist, die beispielsweise in einer Zone mit atmosphärischem Druck, direkt stromab der Tränkzone und/oder stromauf der Temperaturregelungszone, positioniert ist und dazu vorgesehen ist, eingeschlossene Gas- oder Luftrückstände zu beseitigen.

**8.** Verfahren nach einem der Ansprüche 1 bis 6, bei dem die Schritte des Tränkens c) und des Umformens d) in zwei verschiedenen und aufeinander folgenden Werkzeugen ablaufen, wobei das erste Werkzeug mit einer Entlüftung direkt stromab der Tränkzone ausgestattet ist, die dazu vorgesehen ist, eingeschlossene Gas- oder Luftrückstände zu beseitigen.

**9.** Verfahren nach einem der Ansprüche 1 bis 6, bei dem die Schritte des Tränkens c) und Umformens d) in zwei verschiedenen und aufeinander folgenden Werkzeugen ablaufen, wobei das zweite Werkzeug aus einem Kalander oder einer Straße aus mehreren Kalandern mit Temperaturregelung besteht.

**10.** Verfahren nach einem der vorhergehenden Ansprüche, das ferner mindestens ein Schmiermittel einsetzt, insbesondere in Schritt c) und/oder d), das bevorzugt unter den Polymerherstellungshilfsstoffen wie Polyvinylidenfluorid oder Polytetrafluorethylen, den Weichmachern wie den zyklischen Esteroligomeren, den mineralischen Füllstoffen wie Talk, Glimmer und Graphit und ihren Mischungen gewählt ist.

**11.** Verfahren nach einem der vorhergehenden Ansprüche, bei dem das gebildete Profil ein Verstärkungsstoffvolumen von 35 bis 75 %, insbesondere von 50 bis 63 %, bezogen auf das Gesamtvolumen des Profils besitzt.

## Claims

**1.** A method for continuous production of a composite material profile (30) by injection-pultrusion from at least one reinforcing fabric (14) and at least one thermoplastic polymer, said method comprising at least the stages consisting of:

- a) having available a thermoplastic polymeric composition of viscosity less than or equal to 50 Pa.s and based on one or more thermoplastic polymers in the molten state and,
- b) having available a reinforcing fabric at a temperature less than 400°C preferably 350°C, and greater than or equal to the temperature of said polymeric composition in the molten state,
- c) impregnating said fabric from stage b) with said polymeric composition from stage a);
- d) shaping said fabric impregnated with said polymeric composition to form said profile,

method in which:

- i) said fabric is continuously pulled with a pulling speed of at least 0.4 $m.min^{-1}$ in the course of said process;
- ii) the impregnation stage c) is performed by injection of said polymeric composition in the molten state through the fabric;
- iii) the fabric impregnated with said polymeric composition is shaped in stage d) with a thermal profile such that:
- its surface temperature is less than the crystallization temperature of said polymeric composition if semi-crystalline and less than 125°C above the glass transition temperature (Tg) of said polymeric composition if amorphous, and
- its core temperature is greater than the crystallization temperature of said polymeric composition if semi-crystalline and higher than 50°C above the glass transition temperature (Tg) of said polymeric composition if amorphous;

in which the impregnation c) and shaping d) stages proceed in a common channel comprising successively a hot entry zone (24), a hot impregnation zone having an injection chamber (25), a thermal control zone (28) and a shaping zone (29);
or the impregnation c) and shaping d) stages proceed in two distinct and consecutive channels, the first channel comprising successively a hot entry zone and a hot impregnation zone having an injection chamber, the second channel comprising a shaping zone; wherein a thermal control zone is provided between the two channels;
in which said fabric impregnated with said polymeric composition is cooled in the thermal control zone;
and in which the viscosity, in the molten state, is measured by means of a plate-plate rheometer of diameter 50 mm, with an incremental shear scan ranging from 1 to 160 $s^{-1}$; the polymeric material to be assessed is in the form of granules, possibly of a film of thickness 150 $\mu$m; when the polymeric composition is comparable to a semi-crystalline material, it is brought to a temperature ranging from 10 to 100°C above its melting point and the measurement is then performed; when the polymeric composition is comparable to an amorphous material, it is brought to a temperature of 100 to 250°C above the glass transition temperature, and the measurement is

then performed.

2. The method as claimed in the previous claim, further comprising a cooling stage following the shaping stage d), in which said profile is cooled throughout its thickness at a temperature ranging from 150°C to 50°C.

3. The method as claimed in any one of the previous claims, in which said fabric is continuously pulled with a pulling speed ranging from 0.4 to 12 $m.min^{-1}$, preferably from 0.5 to 8 $m.min^{-1}$ by means of a pulling apparatus (16) positioned downstream of the channel (20) devoted to the shaping stage.

4. The method as claimed in any one of the previous claims, in which said polymeric composition utilized in stage c) has in the molten state a viscosity ranging from 1 to 30 Pa.s, preferably from 1 to 25 Pa.s.

5. The method as claimed in any one of the previous claims in which said composition is formed of at least one semi-crystalline or amorphous polyamide or of a mixture thereof.

6. The method as claimed in the previous claim, in which said polyamide, preferably semi-crystalline, has a weight average molecular weight Mw lying between 6,000 and 25,000 g/mol, measured by gel permeation chromatography.

7. The method as claimed in any one of the previous claims, in which the impregnation c) and shaping d) stages proceed in a common channel, said channel being provided with a vent, for example positioned in a zone at atmospheric pressure, directly downstream of the impregnation zone, and/or upstream of the thermal control zone, devoted to the elimination of occluded gaseous residues or air.

8. The method as claimed in any one of claims 1 to 6, in which the impregnation c) and shaping d) stages proceed in two distinct and consecutive channels, said first channel being provided with a vent, directly downstream of the impregnation zone, devoted to the elimination of occluded gaseous residues or air.

9. The method as claimed in any one of claims 1 to 6, in which the impregnation c) and shaping d) stages proceed in two distinct and consecutive channels, the second channel being constituted of calendering machine or a train of several calendering machines at controlled temperature.

10. The method as claimed in any one of the previous claims, further utilizing at least one lubricating agent, in particular in stage c) and/or d), preferably selected from polymer production auxiliary agents such as polyvinylidene fluoride or polytetrafluoroethylene, plasticizers such as oligomers of cyclic ester(s), mineral fillers such as talc, mica and graphite and mixtures thereof.

11. The method as claimed in any one of the previous claims, in which said shaped profile has a volume of reinforcing fabric ranging from 35 to 75%, in particular ranging from 50 to 63%, relative to the total volume of the profile.

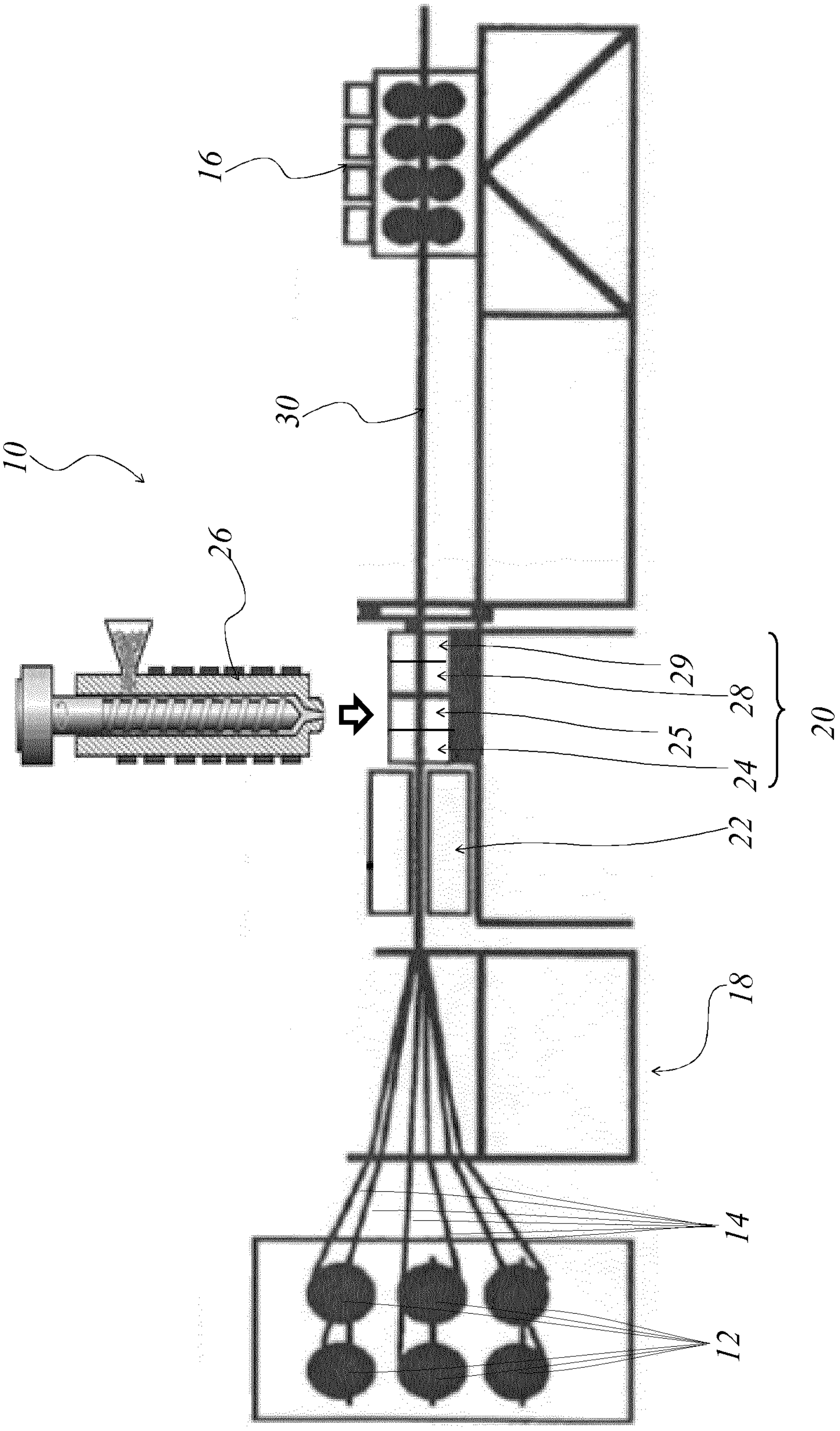


**Figure 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2011003786 A1
- WO 2011003787 A1
- WO 2011144592 A1
- WO 2011073198 A1
- EP 0056703 A
- US 5073413 A
- WO 2011131664 A
- WO 03029350 A1
- WO 2005061209 A1
- WO 2008155318 A1
- WO 2010034771 A1
- WO 2011073200 A1
- FR 2743077
- FR 2779730
- EP 0682057 A
- EP 0832149 A
- EP 0682070 A
- EP 0672703 A